# EUROPEAN PATENT APPLICATION

(11) **EP 4 390 984 A1**
(43) Date of publication of application: **26.06.2024**
(21) Application number: 21960229.9
(22) Date of filing: 13.10.2021
(51) Int. Cl.: H01F 17/06

(54) **COMMON MODE INDUCTOR, COMMON MODE INDUCTOR WINDING METHOD, AND ADAPTER**

(71) Applicant: Huawei Digital Power Technologies Co., Ltd., Shenzhen, Guangdong 518043 (CN)
(72) Inventor: SUN, Chenghao, Shenzhen, Guangdong 518043 (CN); LIU, Huasheng, Shenzhen, Guangdong 518043 (CN); ZHAO, Weiyang, Shenzhen, Guangdong 518043 (CN)
(74) Representative: Goddar, Heinz J.
(86) International application number: PCT/CN2021/123623
(87) International publication number: WO 2023/060488

(57) **Abstract**

This application discloses a common mode choke, a winding method for a common mode choke, and an adapter. The common mode choke includes a toroidal magnetic core and N windings wound on the toroidal magnetic core, where N is an integer greater than 2. The N windings are rotationally symmetric in a central direction of the toroidal magnetic core. Each of the N windings includes two lead ends. The two lead ends are respectively located at outermost layers of two sides of each winding. Each of the N windings includes a first group of windings and a second group of windings. A starting point of each of the N windings is located between the first group of windings and the second group of windings. A quantity of winding sections in the first group of windings is different from a quantity of winding sections in the second group of windings. Each winding section in both the first group of windings and the second group of windings includes a plurality of winding layers. Each winding layer includes a plurality of coils. The common mode choke provided in this application provides a common mode choke structure that can provide sufficient common mode impedance without increasing a volume, to resolve a problem of excessively small impedance in a high frequency band.

## Description

### TECHNICAL FIELD

This application relates to the field of inductor technologies, and in particular, to a common mode choke, a winding method for a common mode choke, and an adapter.

### BACKGROUND

Currently, adapters develop towards miniaturization and high power density. Some adapter products including gallium nitride (GaN) switch devices have features such as a high switching speed and a high frequency. In some scenarios such as metal shells, fully enclosed potting of products, and load grounding, to resolve an electromagnetic interference (electromagnetic interference, EMI) problem, common mode impedance in a common mode path needs to be increased. There are mainly two common mode paths in the adapter. A first path is a loop formed by parasitic capacitance between primary and secondary sides of a transformer. A second path is a loop formed by parasitic capacitance that is coupled to an input end through a switching transistor.

The common mode impedance is affected by the following two factors and cannot be further increased.
1) Impact of a product volume: Increasing the common mode impedance needs a larger effective area of core (Ae) value, but the larger Ae value indicates a larger volume of the adapter. Therefore, power density of the adapter decreases.
2) Impact of the parasitic capacitance: The parasitic capacitance advances a resonance point of a common mode choke, making the choke capacitive at a high frequency.

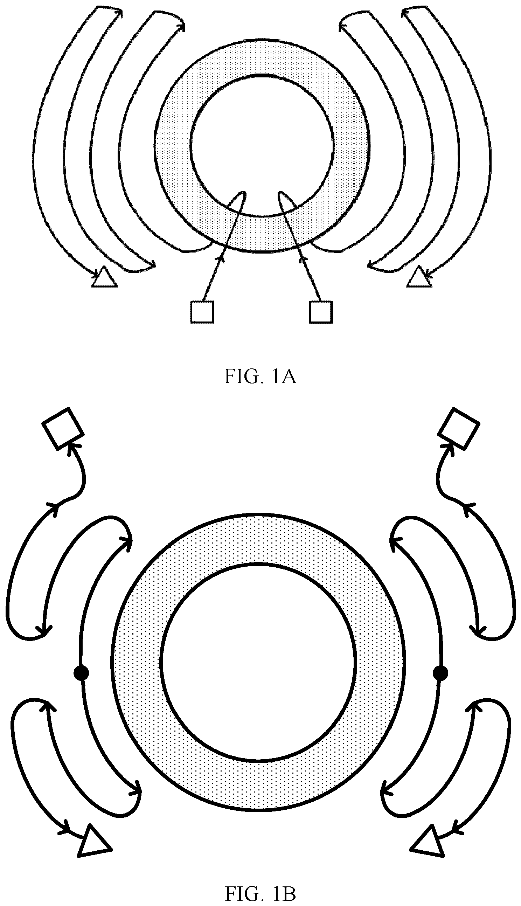

The common mode choke is obtained by winding, on a magnetic ring, two or more groups of coils with an equal quantity of coils wound, an equal diameter of wires, and opposite winding directions, and is configured to suppress common mode interference. There are usually three existing winding methods for the common mode choke: a C-type winding method, a Z-type winding method, and a butterfly-type winding method (X-type winding method). Structures of the C-type winding method and the Z-type winding method have small impedance in a high frequency band, and have poor filtering effect on electro magnetic compatibility (electro magnetic compatibility, EMC). FIG. 1A is a schematic diagram of a common mode choke wound by using the Z-type winding method. FIG. 1B is a schematic diagram of a common mode choke wound by using the butterfly-type winding method. In comparison with the C-type winding method and the Z-type winding method, the butterfly-type winding method can reduce parasitic capacitance between turns and increase high-frequency impedance. However, for a scenario such as a high-frequency switch or a high voltage change rate (dv/dt), impedance in the high frequency band is still insufficient. Therefore, when a common mode noise voltage of the transformer is extremely optimized, the common mode impedance of an entire EMI loop is still insufficient.

In view of this, a common mode choke structure that provides sufficient common mode impedance without increasing a volume in a working scenario such as a high-frequency switch and a high voltage change rate needs to be provided, to resolve a problem of excessively small impedance in the high frequency band.

### SUMMARY

This application provides a common mode choke, a winding method for a common mode choke, and an adapter. A common mode choke structure can provide sufficient common mode impedance without increasing a volume, to resolve a problem of excessively small impedance in a high frequency band.

According to a first aspect, this application provides a common mode choke, including: a toroidal magnetic core and N windings wound on the toroidal magnetic core. N is an integer greater than 2. The N windings are rotationally symmetric in a central direction of the toroidal magnetic core. Each of the N windings includes two lead ends. The two lead ends are respectively located at outermost layers of two sides of each winding. Each of the N windings includes a first group of windings and a second group of windings. A starting point of each of the N windings is located between the first group of windings and the second group of windings. A quantity of winding sections in the first group of windings is different from a quantity of winding sections in the second group of windings. Each winding section in both the first group of windings and the second group of windings includes a plurality of winding layers. Each winding layer includes a plurality of coils.

In this application, the common mode choke is obtained by using a winding method for a common mode choke in which a plurality of winding sections are rotationally symmetric. In this case, in a scenario such as a high-frequency switch or a high voltage change rate (dv/dt), the common mode choke can increase common mode impedance, reduce parasitic capacitance, and effectively improve an electromagnetic interference filtering capability. In addition, the structure can increase the common mode impedance of the common mode choke based on a specific quantity of turns. Therefore, this can reduce an actual quantity of turns in the common mode choke, and further reduce a volume of coils of the common mode choke.

In a possible implementation, winding directions of the first group of windings and the second group of windings are opposite at a starting point position of each of the N windings. In this structure, the starting point of each winding is rotationally symmetric in the central direction of the toroidal magnetic core. Therefore, during actual installation of the common mode choke, an installation direction of the common mode choke does not need to be considered.

In a possible implementation, each winding section in the first group of windings has a same winding direction, and each winding section in the second group of windings has a same winding direction.

In a possible implementation, winding directions of coils in two adjacent layers of each winding section in each of the N windings are opposite.

In a possible implementation, a quantity of winding layers of each winding section is an odd number. The structure can ensure the installation direction of the common mode choke during the actual installation of the common mode choke.

In a possible implementation, each winding section in both the first group of windings and the second group of windings has a same quantity of winding layers. The structure can ensure better common mode suppression effect.

In a possible implementation, each winding section in each of the N windings has a same quantity of winding layers. The structure can also ensure better common mode suppression effect.

In a possible implementation, the common mode choke includes the toroidal magnetic core and two windings wound on the toroidal magnetic core: a first winding and a second winding. A starting point of the first winding and a starting point of the second winding are centrosymmetric about a center point of the toroidal magnetic core, so that the wound first winding and second winding are rotationally symmetric in the central direction of the toroidal magnetic core. The first winding and the second winding each include two lead ends: a first lead end and a second lead end. The two lead ends are located at outermost layers of two sides of each winding. The first winding and the second winding each include a first group of windings and a second group of windings. The first group of windings includes one winding section. The second group of windings includes two winding sections. The first group of windings and the second group of windings each include three winding layers. Each winding layer includes a plurality of coils. The toroidal magnetic core and a wire for winding are designed.

In a possible implementation, the common mode choke includes the toroidal magnetic core and two windings wound on the toroidal magnetic core: a first winding and a second winding. A starting point of the first winding and a starting point of the second winding are centrosymmetric about a center point of the toroidal magnetic core, so that the wound first winding and second winding are rotationally symmetric in the central direction of the toroidal magnetic core. The first winding and the second winding each include two lead ends: a first lead end and a second lead end. The two lead ends are located at outermost layers of two sides of each winding. The first winding and the second winding each include a first group of windings and a second group of windings. The first group of windings includes one winding section. The second group of windings includes two winding sections. The first group of windings and the second group of windings each include five winding layers. Each winding layer includes a plurality of coils.

In a possible implementation, the common mode choke includes the toroidal magnetic core and two windings wound on the toroidal magnetic core: a first winding and a second winding. A starting point of the first winding and a starting point of the second winding are centrosymmetric about a center point of the toroidal magnetic core, so that the wound first winding and second winding are rotationally symmetric in the central direction of the toroidal magnetic core. The first winding and the second winding each include two lead ends: a first lead end and a second lead end. The two lead ends are located at outermost layers of two sides of each winding. The first winding and the second winding each include a first group of windings and a second group of windings. The first group of windings includes one winding section. The second group of windings includes three winding sections. The first group of windings and the second group of windings each include three winding layers. Each winding layer includes a plurality of coils.

In a possible implementation, the common mode choke includes the toroidal magnetic core and three windings wound on the toroidal magnetic core: a first winding, a second winding, and a third winding. A starting point of the first winding, a starting point of the second winding, and a starting point of the third winding are centrosymmetric about a center point of the toroidal magnetic core, so that the wound first winding, second winding, and third winding are rotationally symmetric in the central direction of the toroidal magnetic core. The first winding, the second winding, and the third winding each include two lead ends: a first lead end and a second lead end. The two lead ends are located at outermost layers of two sides of each winding. The first winding, the second winding, and the third winding each include a first group of windings and a second group of windings. The first group of windings includes one winding section. The second group of windings includes two winding sections. The first group of windings and the second group of windings each include three winding layers. Each winding layer includes a plurality of coils.

According to a second aspect, this application provides a winding method for a common mode choke. The method includes: using a target position of a target wire in N wires as a starting point, where the target position is any point other than two end points on the target wire, and N is an integer greater than 2; fixing the starting point of the target wire at a target angle position of the toroidal magnetic core; winding one end of the target wire in a first direction to form a first group of windings, where the first group of windings includes a plurality of winding sections, and winding the other end of the target wire in a second direction to form a second group of windings, where the second group of windings includes a plurality of winding sections, each of the plurality of winding sections includes a specified quantity of winding layers, the first direction is opposite to the second direction, and a quantity of winding sections in the first group of windings is different from a quantity of winding sections in the second group of windings; and determining an angle position of another wire on the toroidal magnetic core based on the quantity N of the wires and the target angle position, and based on the angle position of the another wire on the toroidal magnetic core, winding another winding by using the same method, to obtain N windings on the toroidal magnetic core, so that the N windings are rotationally symmetric in a central direction of the toroidal magnetic core, to form a common mode choke.

In a possible implementation, the winding one end of the target wire in a first direction to form a first group of windings includes: winding one end of the target wire in the first direction based on the specified quantity of winding layers to form one winding section, where each of the specified quantity of winding layers includes a specified quantity of coils, and repeatedly winding a plurality of winding sections close to the winding section, to form the first group of windings. The specified quantity of winding layers is an odd number.

In a possible implementation, the winding the other end of the target wire in a second direction to form a second group of windings includes: winding the other end of the target wire in the second direction based on the specified quantity of winding layers to form one winding section, where each of the specified quantity of winding layers includes the specified quantity of coils, and repeatedly winding a plurality of winding sections close to the winding section, to form the second group of windings. The specified quantity of winding layers is an odd number.

According to a third aspect, this application provides an adapter, including a rectifier circuit, a filter circuit, and a direct current to direct current DC-DC conversion circuit. The filter circuit includes the common mode choke according to any one of the first aspect. An input end of the rectifier circuit is connected to an alternating current input source. An input end of the filter circuit is connected to an output end of the rectifier circuit. An input end of the DC-DC conversion circuit is connected to an output end of the filter circuit. The rectifier circuit is used to rectify an alternating current signal input by the alternating current input source to a direct current signal. The filter circuit is used to filter the direct current signal, to suppress electromagnetic interference EMI noise in the direct current signal. The DC-DC conversion circuit is used to adjust a voltage of the filtered direction current signal.

These aspects or other aspects of this application are clearer and more comprehensible in descriptions of the following embodiments.

### BRIEF DESCRIPTION OF DRAWINGS

FIG. 1A is a schematic diagram of a common mode choke wound by using a Z-type winding method;
FIG. 1B is a schematic diagram of a common mode choke wound by using a butterfly-type winding method;
FIG. 2 is a schematic diagram of a structure of a common mode choke according to this application;
FIG. 3A to FIG. 3D are schematic diagrams of winding voltage distribution in different winding methods;
FIG. 3E is a schematic diagram of comparison between common mode choke impedance of a common mode choke wound by using a Z-type winding method, a common mode choke wound by using a butterfly-type winding method, and a common mode choke according to this application;
FIG. 3F is a schematic diagram of comparison between choke phase angles of a common mode choke wound by using a Z-type winding method, a common mode choke wound by using a butterfly-type winding method, and a common mode choke according to this application;
FIG. 4 is a schematic diagram 1 of a common mode choke according to an embodiment of this application;
FIG. 5 is a schematic diagram 2 of a common mode choke according to an embodiment of this application;
FIG. 6 is a schematic diagram 3 of a common mode choke according to an embodiment of this application;
FIG. 7 is a schematic diagram 4 of a common mode choke according to an embodiment of this application;
FIG. 8 is a flowchart of steps of a winding method for a common mode choke; and
FIG. 9 is a schematic diagram of a structure of an adapter according to this application.

### DESCRIPTION OF EMBODIMENTS

To make the technical problems, technical solutions, and advantages to be resolved in this application clearer, the following provides detailed descriptions with reference to the accompanying drawings and specific embodiments.

Terms used in the following embodiments are only intended to describe specific embodiments, but are not intended to limit this application. Terms "one", "a", "the foregoing", "the", and "the one" of singular forms used in this specification and the appended claims of this application are also intended to include plural forms like "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

A switching power supply is a power supply that maintains a stable output voltage by controlling a ratio of turn-on time to turn-off time of a switching transistor. For example, a common switching power supply is an adapter, and the like. Currently, the adapter develops towards miniaturization and high frequency, to improve power density. However, it is increasingly difficult to reduce EMI noise of a switching power supply product. To resolve the EMI noise problem, a common mode choke is usually needed to suppress the EMI noise. A feature of the common mode choke has significant impact on EMI noise suppression effect. A larger toroidal magnetic core has a larger effective core area value, but the adapter develops towards miniaturization. Therefore, a diameter of the toroidal magnetic core in the adapter cannot be extremely large.

In addition, in a high voltage scenario, parasitic capacitance on the choke greatly affects an operation characteristic and work efficiency of the choke. The parasitic capacitance is closely related to a winding structure and a winding layout. In comparison with a common C-type winding method and Z-type winding method in a conventional technology, a butterfly-type winding method can reduce the parasitic capacitance without increasing a volume. However, in some scenarios such as a high-frequency switch or a high voltage change rate (dv/dt), common mode impedance of the butterfly-type winding method is still relatively small, and it is difficult to resolve the EMI problem. In view of this, a common mode choke structure that provides sufficient common mode impedance without increasing a volume in a working scenario such as a high-frequency switch and a high voltage change rate needs to be provided, to resolve a problem of excessively small impedance in a high frequency band.

The common mode choke (common mode choke), also referred to as a common mode inductor, is configured to filter a common mode electromagnetic interference signal (EMI) in the switching power supply. The common mode choke is a common mode interference suppression device that uses ferrite or the like as a magnetic core. A plurality of coils with a same size and a same quantity of turns are symmetrically wound on a same toroidal magnetic core in opposite winding directions, to form a four-terminal or multi-terminal electronic device.

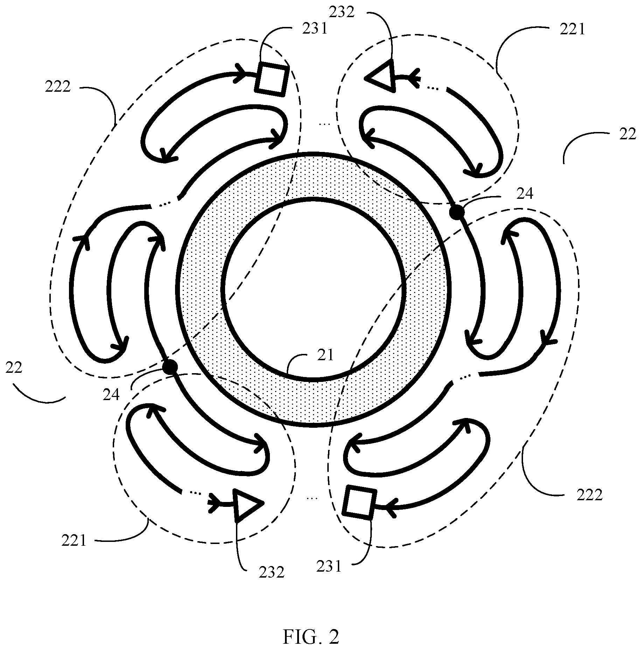

An embodiment of this application provides a common mode choke. As shown in FIG. 2, the common mode choke includes a toroidal magnetic core 21 and N windings 22 wound on the toroidal magnetic core 21. N is an integer greater than 2.

The N windings 22 are rotationally symmetric in a central direction of the toroidal magnetic core 21. Each of the N windings 22 includes two lead ends 23 (a first lead end 231 and a second lead end 232). The two lead ends 23 are respectively located at outermost layers of two sides of each winding. Each of the N windings 22 includes a first group of windings 221 and a second group of windings 222. A starting point 24 of each of the N windings 22 is located between the first group of windings 221 and the second group of windings 222. A quantity of winding sections in the first group of windings 221 is different from a quantity of winding sections in the second group of windings 222. Each winding section in both the first group of windings 221 and the second group of windings 222 includes a plurality of winding layers. Each winding layer includes a plurality of coils.

In specific use, the first lead end 231 and the second lead end 232 may be used as external pins of the common mode choke 20. A current may flow in from the first lead end 231 or the second lead end 232 in each winding, and flow out from the second lead end 232 or the first lead end 231 in each winding.

It should be noted that, in this application, there is an insulation layer on a surface of a wire wound to form the winding. This maintains an insulation state between the winding sections and between the winding layers. Certainly, a shape of the toroidal magnetic core 21 in this application may be but is not limited to a ring, or may be a triangular ring, an elliptical ring, a square ring, a rectangular ring, or any polygonal ring. This is not specifically limited herein. A person skilled in the art may adaptively specify the shape based on a scenario. The toroidal magnetic core 21 may enhance electromagnetic induction effect, increase a magnetic flux, and reduce an eddy current loss, to enhance electromagnetic induction intensity between different coils. A material of the magnetic core is not specifically limited. For example, the magnetic core may be a magnetic powder core (an iron powder core, a sendust core, a high flux powder core, a molybdenum permalloy powder core, or the like) or a ferrite magnetic core. Magnetic cores of various materials may be used in the technical solution in this embodiment of this application. The magnetic powder core is formed by pressing magnetic powder. An outer surface of the pressed magnetic powder core is wrapped with an insulating organic material or an insulating inorganic material after the pressing. This forms insulation between the magnetic powder core and the winding. For example, the organic material may be a resin such as an epoxy resin, and the inorganic material may be a resin such as a silicone resin. The common mode choke made of the magnetic powder core has advantages of a large current, a high frequency, and miniaturization.

In addition, the common mode choke provided in this embodiment of this application may further include a fixed base. The fixed base includes a plurality of lead terminals. The plurality of lead terminals are correspondingly connected to the first lead end 231 and the second lead end 232 of each winding. A specific connection manner is not specifically limited. The first lead end 231 and the second lead end 232 may be connected to one side of the fixed base, or may be respectively connected to two sides of the fixed base. This is not specifically limited herein.

Winding directions of the first group of windings 221 and the second group of windings 222 are opposite at a starting point position of each of the N windings 22. In this embodiment of this application, the starting point is a point at which the wire starts to be wound on the toroidal magnetic core. One wire may be used to form one winding. Any point other than a start point or an end point of the wire is fixed at the starting point of the toroidal magnetic core. There are a plurality of manners of fastening the wire to the toroidal magnetic core. For example, a material such as a bonding agent may be used to bond any point other than the start point or the end point of the wire to the starting point of the toroidal magnetic core. The starting point of each of the N windings 22 may be on an inner side of the toroidal magnetic core, or may be on an outer side of the toroidal magnetic core. The opposite winding directions of the first group of windings and the second group of windings specifically mean: After any point other than the start point or the end point of wire is fixed at the starting point of the toroidal magnetic core, two ends of the wire are wound in opposite directions. In addition, in the foregoing embodiment, each winding section in the first group of windings has a same winding direction, and each winding section in the second group of windings has a same winding direction. Winding directions of coils in two adjacent layers of each winding section in each of the N windings are opposite.

The common mode choke 20 in this application uses a rotationally symmetric winding method. The starting points of the windings are rotationally symmetric in the central direction of the toroidal magnetic core 21. Therefore, during actual installation of the common mode choke 20, an installation direction of the common mode choke does not need to be considered.

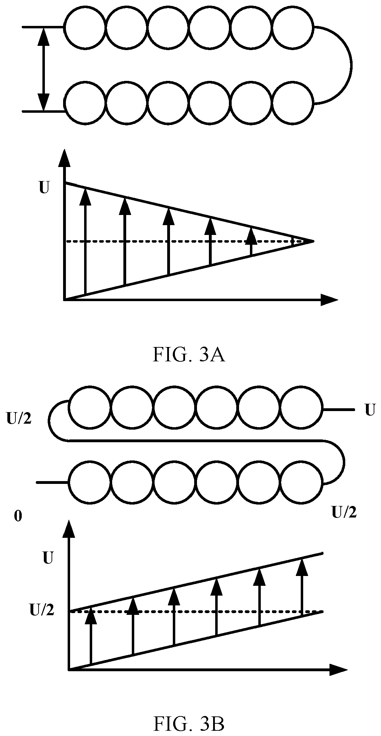

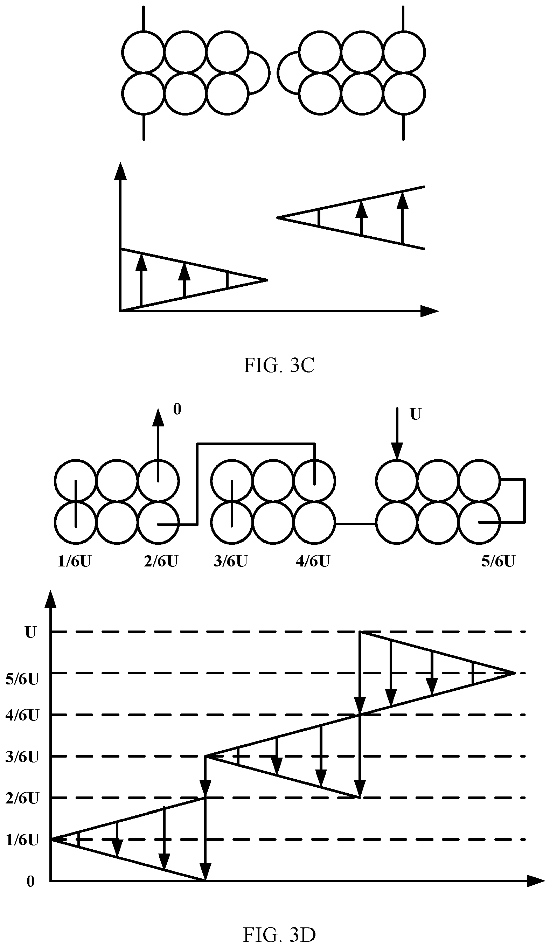

Specifically, parasitic capacitance of the winding in the common mode choke is related to electric field energy in the winding. To calculate the electric field energy, voltage distribution in the winding needs to be known. FIG. 3A to FIG. 3D are schematic diagrams of winding voltage distribution in different winding methods. FIG. 3A is a schematic diagram of a winding voltage in a C-type winding method. It can be seen from FIG. 3A that, when the C-type winding method is used, although the winding method is simple, a maximum voltage difference between adjacent turns of an upper layer and a lower layer is large, and energy stored by the parasitic capacitance is large. Therefore, equivalent capacitance of a terminal of the winding is large. FIG. 3B is a schematic diagram of a winding voltage in a Z-type winding method. It can be seen from FIG. 3B that, when the Z-type winding method is used, although the winding method is slightly complex, a voltage difference between adjacent turns of coils of an upper layer and a lower layer decreases, and equivalent capacitance of a terminal of the winding decreases. FIG. 3C is a schematic diagram of winding voltage distribution in a sectional winding method. In the sectional winding method, an original quantity of coils are divided into several equal parts. Therefore, a maximum voltage difference between all coil sections is only a fraction of an input voltage. A larger quantity of sections indicates a smaller maximum voltage difference between the coils, and smaller equivalent parasitic capacitance of the winding. FIG. 3D is a schematic diagram of a choke voltage according to this application. The parasitic capacitance may be significantly reduced by using a multi-sectional winding method, and a single winding is further wound in an asymmetric manner. This can increase high-frequency impedance of the common mode choke. Each of the N windings 22 includes a plurality of winding sections. In comparison with a winding method in the conventional technology, the multi-sectional winding method may reduce a voltage difference between winding layers of the common mode choke, to reduce the parasitic capacitance.

In an optional solution, a quantity of winding layers of each winding section is an odd number. This can better ensure that, during actual installation of the common mode choke 20, an installation direction of the common mode choke does not need to be considered.

In an optional solution, to ensure common mode suppression effect, each winding section in both the first group of windings and the second group of windings has a same quantity of winding layers, and each winding section in each of the N windings has a same quantity of winding layers.

A common mode choke formed by two windings is used as an example. A specific working manner of the common mode choke may be: The two windings are both wound on a same toroidal magnetic core, and have a same quantity of turns and a same phase (opposite winding directions). When a normal current in a circuit flows through the common mode choke, the current generates reverse magnetic fields that counteract with each other in windings wound on the same phase. In this case, the normal signal current is mainly less affected by resistance of the winding. When a common mode current flows through the winding, due to codirectionality of the common mode current, co-directional magnetic fields are generated in the winding. This increases inductive reactance of the winding, enables the winding to present a high impedance state, and generates strong damping effect, to attenuate the common mode current and achieve a filtering purpose. Therefore, when the common mode current flows in the common mode choke, larger impedance of each winding on the common mode choke indicates better common mode current suppression effect, and better suppression of EMI noise.

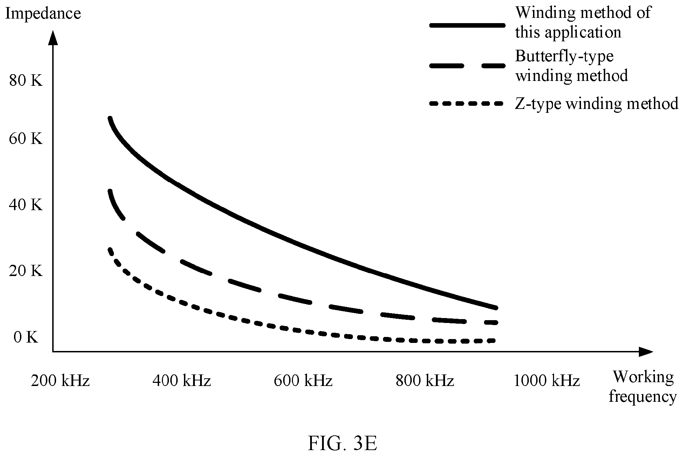

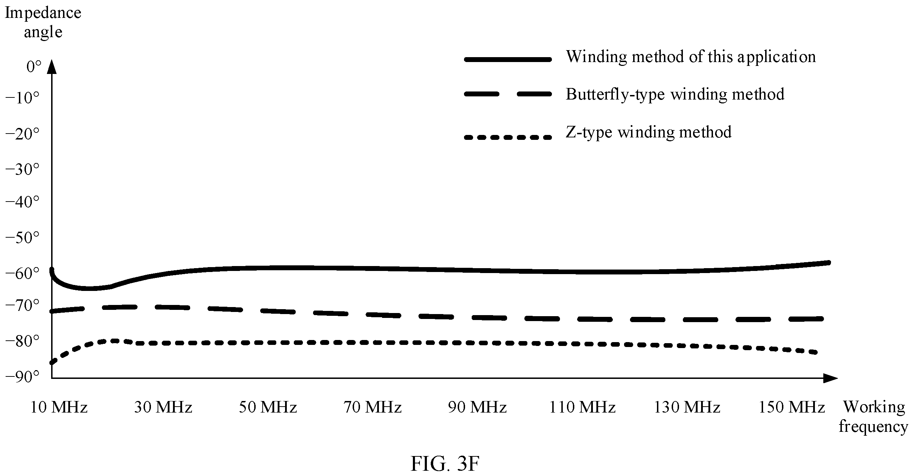

FIG. 3E is a schematic diagram of comparison between common mode choke impedance of a common mode choke wound by using a Z-type winding method, a common mode choke wound by using a butterfly-type winding method, and a common mode choke according to this application. FIG. 3F is a schematic diagram of comparison between choke phase angles of a common mode choke wound by using a Z-type winding method, a common mode choke wound by using a butterfly-type winding method, and a common mode choke according to this application. As shown in FIG. 3E and FIG. 3F, in comparison with the Z-type winding method and the butterfly-type winding method, a common mode choke structure provided in this application has larger impedance and a smaller impedance angle under a same working frequency and test condition.

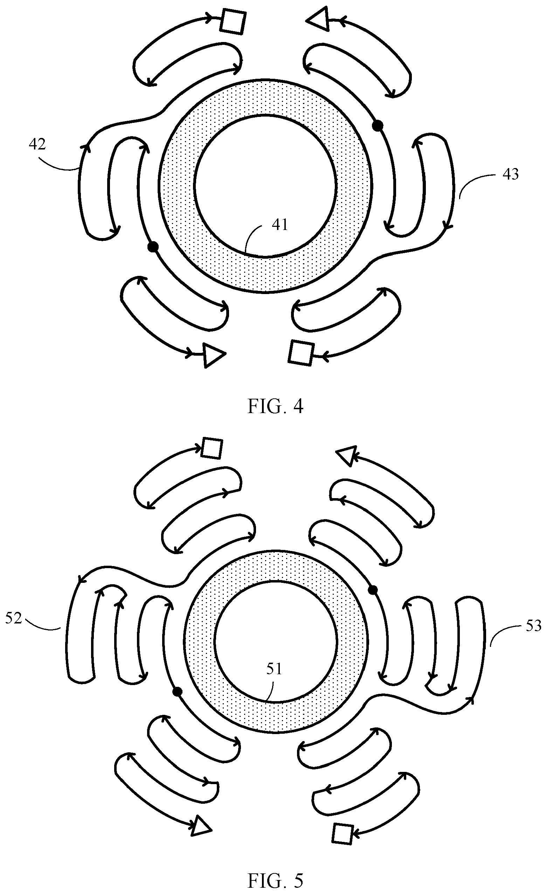

The following describes structures and constructions of several optional common mode chokes in this application. Construction 1: FIG. 4 is a schematic diagram 1 of a common mode choke according to an embodiment of this application. As shown in FIG. 4, the common mode choke includes a toroidal magnetic core 41 and two windings wound on the toroidal magnetic core 41: a first winding 42 and a second winding 43. A starting point of the first winding 42 and a starting point of the second winding 43 are centrosymmetric, so that the wound first winding 42 and second winding 43 are rotationally symmetric in a central direction of the toroidal magnetic core 41. The first winding 42 and the second winding 43 each include two lead ends: a first lead end and a second lead end (two ends of one wire). The two lead ends are located at outermost layers of two sides of each winding. The first winding 42 and the second winding 43 each include a first group of windings and a second group of windings. The first group of windings includes one winding section. The second group of windings includes two winding sections. The first group of windings and the second group of windings each include three winding layers. Each winding layer includes a plurality of coils. For a design of the toroidal magnetic core 41 and a wire for winding, refer to the foregoing embodiment. Details are not described herein again. The construction provided in this application may obviously increase low-frequency impedance and high-frequency impedance, improve a low-frequency EMI filtering capability, and increase a high-frequency impedance angle.

Construction 2: FIG. 5 is a schematic diagram 2 of a common mode choke according to an embodiment of this application. As shown in FIG. 5, the common mode choke includes a toroidal magnetic core 51 and two windings wound on the toroidal magnetic core 51: a first winding 52 and a second winding 53. A starting point of the first winding 52 and a starting point of the second winding 53 are centrosymmetric, so that the wound first winding 52 and second winding 53 are rotationally symmetric in a central direction of the toroidal magnetic core 51. The first winding 52 and the second winding 53 each include two lead ends: a first lead end and a second lead end. The two lead ends are located at outermost layers of two sides of each winding. The first winding 52 and the second winding 53 each include a first group of windings and a second group of windings. The first group of windings includes one winding section. The second group of windings includes two winding sections. The first group of windings and the second group of windings each include five winding layers. Each winding layer includes a plurality of coils. For a design of the toroidal magnetic core 51 and a wire for winding, refer to the foregoing embodiments. Details are not described herein again. The structure increases a quantity of winding layers of each section based on the construction 1, so that common mode impedance of the common mode choke is increased.

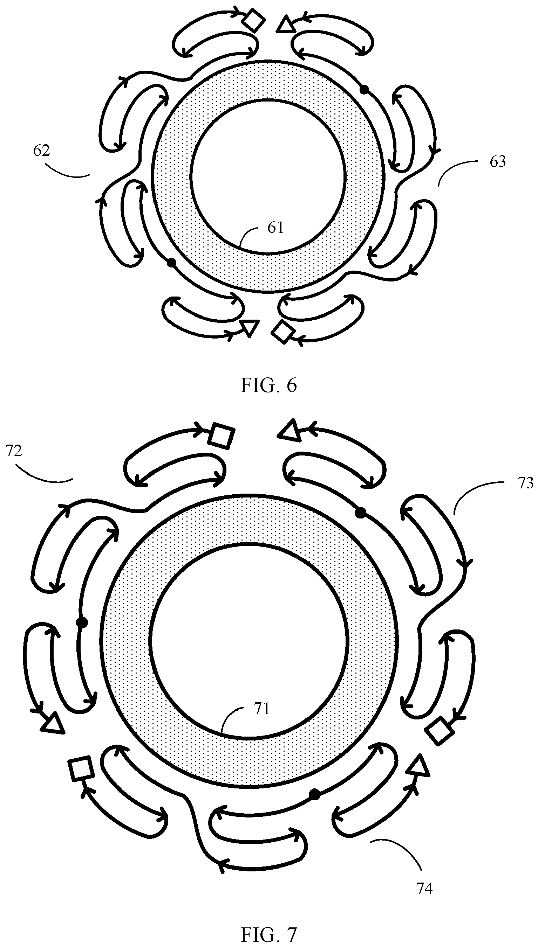

Construction 3: FIG. 6 is a schematic diagram 3 of a common mode choke according to an embodiment of this application. As shown in FIG. 6, the common mode choke includes a toroidal magnetic core 61 and two windings wound on the toroidal magnetic core 61: a first winding 62 and a second winding 63. A starting point of the first winding 62 and a starting point of the second winding 63 are centrosymmetric, so that the wound first winding 62 and second winding 63 are rotationally symmetric in a central direction of the toroidal magnetic core 61. The first winding 62 and the second winding 63 each include two lead ends: a first lead end and a second lead end. The two lead ends are located at outermost layers of two sides of each winding. The first winding 62 and the second winding 63 each include a first group of windings and a second group of windings. The first group of windings includes one winding section. The second group of windings includes three winding sections. The first group of windings and the second group of windings each include three winding layers. Each winding layer includes a plurality of coils. For a design of the toroidal magnetic core 61 and a wire for winding, refer to the foregoing embodiments. Details are not described herein again. The structure increases a quantity of sections in the second group of windings of each winding based on the construction 1, so common mode impedance of the common mode choke is increased.

Construction 4: FIG. 7 is a schematic diagram 4 of a common mode choke according to an embodiment of this application. As shown in FIG. 7, the common mode choke includes a toroidal magnetic core 71 and three windings wound on the toroidal magnetic core 71: a first winding 72, a second winding 73, and a third winding 74. A starting point of the first winding 72, a starting point of the second winding 73, and a starting point of the third winding 74 are centrosymmetric, so that the wound first winding 72, second winding 73, and third winding 74 are rotationally symmetric in a central direction of the toroidal magnetic core 71. The first winding 72, the second winding 73, and the third winding 74 each include two lead ends: a first lead end and a second lead end. The two lead ends are located at outermost layers of two sides of each winding. The first winding 72, the second winding 73, and the third winding 74 each include a first group of windings and a second group of windings. The first group of windings includes one winding section. The second group of windings includes two winding sections. The first group of windings and the second group of windings each include three winding layers. Each winding layer includes a plurality of coils. For a design of the toroidal magnetic core 71 and a wire for winding, refer to the foregoing embodiments. Details are not described herein again. The structure increases a total quantity of windings, and can further expand an application scenario of the common mode choke, for example, an application scenario of a three-phase current.

It should be noted that the foregoing embodiments are only several optional implementations of the technical solutions of this application, and are not enumerated herein.

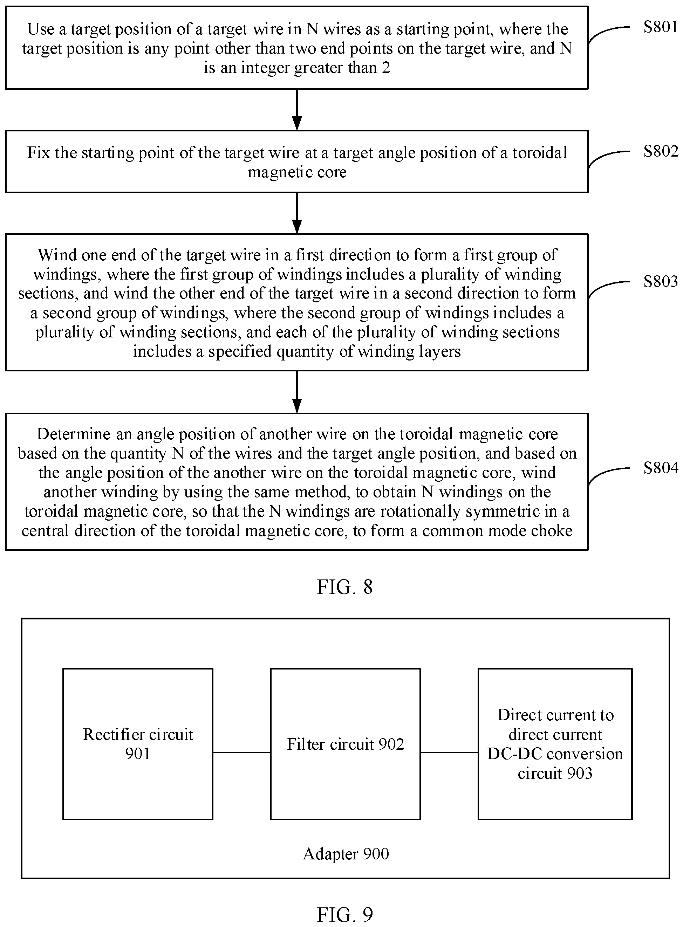

Based on a same technical concept, an embodiment of this application further provides a winding method for a common mode choke, used to manufacture the common mode choke shown in FIG. 2. As shown in FIG. 8, the winding method includes the following steps.

Step S801: Use a target position of a target wire in N wires as a starting point, where the target position is any point other than two end points on the target wire, and N is an integer greater than 2.

Step S802: Fix the starting point of the target wire at a target angle position of the toroidal magnetic core.

Step S803: Wind one end of the target wire in a first direction to form a first group of windings, where the first group of windings includes a plurality of winding sections, and wind the other end of the target wire in a second direction to form a second group of windings, where the second group of windings includes a plurality of winding sections. Each of the plurality of winding sections includes a specified quantity of winding layers. The first direction is opposite to the second direction. A quantity of winding sections in the first group of windings is different from a quantity of winding sections in the second group of windings.

Step S804: Determine an angle position of another wire on the toroidal magnetic core based on the quantity N of the wires and the target angle position, and based on the angle position of the another wire on the toroidal magnetic core, wind another winding by using the same method, to obtain N windings on the toroidal magnetic core, so that the N windings are rotationally symmetric in a central direction of the toroidal magnetic core, to form a common mode choke.

In an embodiment, the winding one end of the target wire in a first direction to form a first group of windings in step S803 may include: winding one end of the target wire in the first direction based on the specified quantity of winding layers to form one winding section, where each of the specified quantity of winding layers includes a specified quantity of coils, and repeatedly winding a plurality of winding sections close to the winding section, to form the first group of windings. The specified quantity of winding layers is an odd number.

In an embodiment, the winding the other end of the target wire in a second direction to form a second group of windings in step S803 may include: winding the other end of the target wire in the second direction based on the specified quantity of winding layers to form one winding section, where each of the specified quantity of winding layers includes the specified quantity of coils, and repeatedly winding a plurality of winding sections close to the winding section, to form the second group of windings. The specified quantity of winding layers is an odd number.

Based on a same technical concept, refer to FIG. 9, this application further provides an adapter 900. The adapter 900 includes a rectifier circuit 901, a filter circuit 902, and a direct current to direct current DC-DC conversion circuit 903. The filter circuit 902 includes the common mode choke provided in the foregoing embodiments. An input end of the rectifier circuit 901 is connected to an alternating current input source. An input end of the filter circuit 902 is connected to an output end of the rectifier circuit 901. An input end of the DC-DC conversion circuit 903 is connected to an output end of the filter circuit 902. The rectifier circuit 901 is used to rectify an alternating current signal input by the alternating current input source to a direct current signal. The filter circuit 902 is used to filter the direct current signal, to suppress electromagnetic interference EMI noise in the direct current signal. The DC-DC conversion circuit 903 is used to adjust a voltage of the filtered direction current signal.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to this application without departing from the scope of this application. This application is intended to cover these modifications and variations of this application provided that they fall within the scope of protection defined by the following claims and their equivalent technologies.

## Claims

1. A common mode choke, comprising:
a toroidal magnetic core and N windings wound on the toroidal magnetic core, wherein N is an integer greater than 2; and
the N windings are rotationally symmetric in a central direction of the toroidal magnetic core; each of the N windings comprises two lead ends; the two lead ends are respectively located at outermost layers of two sides of each winding; each of the N windings comprises a first group of windings and a second group of windings; a starting point of each of the N windings is located between the first group of windings and the second group of windings; a quantity of winding sections in the first group of windings is different from a quantity of winding sections in the second group of windings; each winding section in both the first group of windings and the second group of windings comprises a plurality of winding layers; and each winding layer comprises a plurality of coils.

2. The common mode choke according to claim 1, wherein winding directions of both the first group of windings and the second group of windings are opposite at a starting point position of each of the N windings.

3. The common mode choke according to claim 1 or 2, wherein each winding section in the first group of windings has a same winding direction, and each winding section in the second group of windings has a same winding direction.

4. The common mode choke according to any one of claims 1 to 3, wherein winding directions of coils in two adjacent layers of each winding section in each of the N windings are opposite.

5. The common mode choke according to any one of claims 1 to 4, wherein a quantity of winding layers of each winding section is an odd number.

6. The common mode choke according to any one of claims 1 to 5, wherein each winding section in both the first group of windings and the second group of windings has a same quantity of winding layers.

7. The common mode choke according to any one of claims 1 to 6, wherein each winding section in each of the N windings has a same quantity of winding layers.

8. A winding method for a common mode choke, wherein the method comprises:
using a target position of a target wire in N wires as a starting point, wherein the target position is any point other than two end points on the target wire, and N is an integer greater than 2;
fixing the starting point of the target wire at a target angle position of the toroidal magnetic core;
winding one end of the target wire in a first direction to form a first group of windings, wherein the first group of windings comprises a plurality of winding sections, and winding the other end of the target wire in a second direction to form a second group of windings, wherein the second group of windings comprises a plurality of winding sections, each of the plurality of winding sections comprises a specified quantity of winding layers, the first direction is opposite to the second direction, and a quantity of winding sections in the first group of windings is different from a quantity of winding sections in the second group of windings; and
determining an angle position of another wire on the toroidal magnetic core based on the quantity N of the wires and the target angle position, and based on the angle position of the another wire on the toroidal magnetic core, winding another winding by using the same method, to obtain N windings on the toroidal magnetic core, so that the N windings are rotationally symmetric in a central direction of the toroidal magnetic core, to form a common mode choke.

9. The method according to claim 8, wherein the winding one end of the target wire in a first direction to form a first group of windings comprises:
winding one end of the target wire in the first direction based on the specified quantity of winding layers to form one winding section, wherein each of the specified quantity of winding layers comprises a specified quantity of coils, and repeatedly winding a plurality of winding sections close to the winding section, to form the first group of windings, wherein the specified quantity of winding layers is an odd number.

10. The method according to claim 8, wherein the winding the other end of the target wire in a second direction to form a second group of windings comprises:
winding the other end of the target wire in the second direction based on the specified quantity of winding layers to form one winding section, wherein each of the specified quantity of winding layers comprises the specified quantity of coils, and repeatedly winding a plurality of winding sections close to the winding section, to form the second group of windings, wherein the specified quantity of winding layers is an odd number.

11. An adapter, wherein the adapter comprises a rectifier circuit, a filter circuit, and a direct current to direct current DC-DC conversion circuit; the filter circuit comprises the common mode choke according to any one of claims 1 to 7; an input end of the rectifier circuit is connected to an alternating current input source; an input end of the filter circuit is connected to an output end of the rectifier circuit; and an input end of the DC-DC conversion circuit is connected to an output end of the filter circuit; and
the rectifier circuit is used to rectify an alternating current signal input by the alternating current input source to a direct current signal; the filter circuit is used to filter the direct current signal; and the DC-DC conversion circuit is used to adjust a voltage of the filtered direction current signal.
